# EUROPEAN PATENT APPLICATION

(11) **EP 4 675 532 A1**
(43) Date of publication of application: **07.01.2026**
(21) Application number: 24778075.2
(22) Date of filing: 27.03.2024
(51) Int. Cl.: G06Q 10/10, G06F 11/36, G06Q 50/50

(54) **INTERACTION CONTEXT MANAGEMENT METHOD AND APPARATUS, DEVICE, SYSTEM, AND STORAGE MEDIUM**

(30) Priority: 27.03.2023 CN 202310317358
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: DENG, Lingli, Beijing 100053 (CN); ZHANG, Yuhan, Beijing 100053 (CN); FENG, Junlan, Beijing 100053 (CN)
(74) Representative: J A Kemp LLP
(86) International application number: PCT/CN2024/084130
(87) International publication number: WO 2024/199289

(57) **Abstract**

Disclosed in the present disclosure are an interaction context management method and apparatus, a device, a system, and a storage medium, relating to the technical field of communications, to enhance the flexibility of managing an interaction process between a provider and an operator. The method includes: retrieving an interaction context of a communication peer, wherein the interaction context of the communication peer includes a context identifier; performing processing based on the interaction context of the communication peer to acquire a processing result, and obtaining a local interaction context according to the processing result; and sending the local interaction context to the communication peer, wherein the local interaction context includes the context identifier. Embodiments of the present disclosure can enhance the flexibility of managing an interaction process between a provider and an operator.

## Description

### CROSS-REFERENCE TO RELATED APPLICATIONS

The present disclosure is based on and claims the priority of the Chinese patent application No. 202310317358.6 filed on March 27, 2023, the entire content of which is incorporated herein by reference.

### TECHNICAL FIELD

The present disclosure relates to the technical field of communications, and in particular, to an interaction context management method and apparatus, a device, a system, and a storage medium.

### BACKGROUND

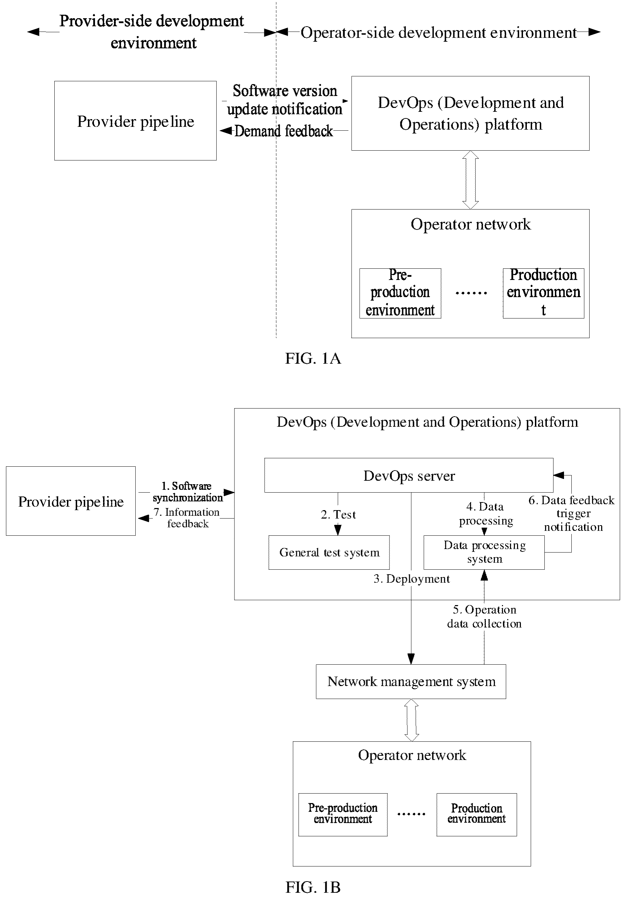

A Development and Operations (DevOps, i.e., a collective term for a set of processes, methods, and systems) framework supporting communication operation and management, as shown in FIG. 1A, mainly includes the following two environments: a provider-side development environment and an operator-side development environment.
1. Provider-side development environment: The provider-side development environment refers to a development environment composed of development pipelines of different telecommunication providers. The providers complete the entire process from demand management, design, development, construction, and testing, to delivery based on their own development pipelines, thereby generating software artifacts for delivery.
2. Operator-side development environment: The operator-side development environment includes a DevOps platform, a pre-production environment, and a production environment. The DevOps platform provides development, operation and management based on telecommunication software. The pre-production environment is used for pre-deployment and verification before software product launch. The production environment refers to an environment in which a software product formally provides services to the outside, and the operator production environment should meet the requirements of credibility and controllability.

As shown in FIG. 1B, after receiving software artifacts delivered by the telecommunication provider, the operator first performs software synchronization with the provider pipeline. In the operator-side development environment, related activities such as an acceptance test, launch deployment, and operation & monitoring are completed through an automated pipeline.

Acceptance testing phase: The DevOps server of the operator's DevOps platform deploys newly released software to the test network environment and instructs the general test system to perform verification tests before deployment.

Deployment phase: The DevOps server of the operator's DevOps platform deploys newly released software to the production environment.

Operation & monitoring phase: The DevOps server subscribes to the operation data of the deployed software from the production environment, instructs the data processing system to perform on-demand processing on collected data, generates data to be fed back, and notifies the DevOps server to feed back to the provider.

Demand feedback phase: The DevOps server feeds back a delivery (test) deployment (operation) state and necessary auxiliary information of the newly released software to the provider for continuous optimization of the provider software.

In the DevOps framework supporting communication operation management, the telecommunication provider, after completing the release of software artifacts, promptly notifies, through a software update notification interface, the operator to acquire the software artifacts, and once the operator receives a software update notification from the provider, the operator acquires the software artifacts through a software pull interface and triggers the internal pipeline of the operator. Test data, operation data, and the like generated by the software artifacts of the telecommunication provider in the production environment of the operator are collected by the operator pipeline, and then are uniformly fed back to the provider, thereby completing a closed loop of software product requirement feedback, also known as a feedback phase. In this process, life cycle management should be performed on the data to ensure data security.

In the above DevOps process, if an unexpected abnormal situation occurs in any link, it may cause the current round of the procedure to terminate and enter the feedback phase prematurely. Meanwhile, the operator feeds back necessary diagnostic auxiliary information to the telecommunication provider to help the telecommunication provider to perform problem locating, version updating, and iterative optimization. However, there is no solution in the prior art regarding how to manage interaction contexts between different iterations.

### DIGEST

Embodiments of the present disclosure provide an interaction context management method, apparatus, device, system, and storage medium, to enhance the flexibility of managing an interaction process between a provider and an operator.

In a first aspect, an embodiment of the present disclosure provides an interaction context management method applied to a provider or an operator, comprising: retrieving an interaction context of a communication peer, wherein the interaction context of the communication peer comprises a context identifier; performing processing based on the interaction context of the communication peer to acquire a processing result, and obtaining a local interaction context according to the processing result; and sending the local interaction context to the communication peer, wherein the local interaction context comprises the context identifier; wherein the communication peer of the provider is the operator, and the communication peer of the operator is the provider.

Optionally, version identifier(s) is/are used to identify version information of software to be released; defect identifier(s) is/are used to identify defect(s) expected to be resolved in a current version of the software to be released, or to identify defect(s) encountered during testing or maintenance processes of the current version of the software to be released; and test identifier(s) is/are used to identify test case(s) that aim to verify resolved defect(s) in the current version of the software to be released, or to identify test case(s) that are used to verify the existence of defect(s) in the current version of the software to be released.

Optionally, if the method is applied to the operator, the method further comprises: sending a subscription notification message to the provider during a software onboarding phase, wherein the subscription notification message comprises the context identifier.

Optionally, the performing processing based on the interaction context of the communication peer to acquire a processing result, and obtaining a local interaction context according to the processing result comprises: receiving a software update message sent by the provider during the software onboarding phase, wherein the software update message comprises the interaction context of the communication peer; validating the context identifier in the software update message; and after the validation of the context identifier is passed, updating a local context, and generating the local interaction context.

Optionally, the updating a local context, and generating the local interaction context comprises: if it is determined, based on the version identifier(s) in the interaction context of the communication peer, that the current version is a testing version of a target version of the software to be released and the interaction context of the communication peer comprises the defect identifier(s) and the test identifier(s), recording the test identifier(s) in the local context and populating test case(s) corresponding to the target version, and generating the local interaction context.

Optionally, the performing processing based on the interaction context of the communication peer to acquire a processing result, and obtaining a local interaction context according to the processing result comprises: obtaining a software package sent by the provider during the software onboarding phase, wherein the software package comprises the interaction context of the communication peer, and the interaction context of the communication peer comprises the version identifier(s), the defect identifier(s), and the test identifier(s); validating the version identifier(s) in the software package; after the validation of the version identifier(s) is passed, determining the validity of a test case template corresponding to the test identifier(s); and after verification of the validity of the test case template is passed, updating a context status in a local context, and generating the local interaction context.

Optionally, if the method is applied to the operator, the method further comprises: determining an iteration type of a current pipeline based on the version identifier(s) in the interaction context of the communication peer.

Optionally, the determining an iteration type of a current pipeline based on the version identifier(s) in the interaction context of the communication peer comprises: if the version identifier(s) in the interaction context of the communication peer indicates that the current version is a target version for delivery of the software to be released, the iteration type of the current pipeline is a testing-deployment-feedback pipeline; and if the version identifier(s) in the interaction context of the communication peer indicates that the current version is a testing version of the software to be released, the iteration type of the current pipeline is a testing-feedback pipeline.

Optionally, if the method is applied to the operator, the performing processing based on the interaction context of the communication peer to acquire a processing result, and obtaining a local interaction context according to the processing result comprises: verifying, during a testing phase, the completeness of one or more test case sets corresponding to the test identifier(s) based on the test identifier(s) in the interaction context of the communication peer; if the verification of the completeness of the one or more test case sets corresponding to the test identifier(s) is passed, testing the one or more test case sets; if the test is passed, updating a context status in a local context to accepted, and generating the local interaction context; and if the test is unsuccessful, recording the defect identifier(s) in the local context, and generating the local interaction context.

Optionally, if the method is applied to the operator, the performing processing based on the interaction context of the communication peer to acquire a processing result, and obtaining a local interaction context according to the processing result comprises: during a deployment phase, if a software upgrade is successful, updating a context status in a local context to deployed, and generating the local interaction context; and if the software upgrade is not successful, adding defect identifier(s) to the local context, and generating the local interaction context.

Optionally, if the method is applied to the operator, the sending the local interaction context to the communication peer comprises: during a feedback phase, sending the local interaction context to the provider, wherein the local interaction context comprises the version identifier(s), the defect identifier(s), and the test identifier(s).

Optionally, if the method is applied to the operator, the interaction context of the communication peer further comprises: information of a currently released subversion of the software to be released; and one or more identifiers of one or more test cases corresponding to the subversion; wherein the information of the currently released subversion of the software to be released comprises one or more of the following: a version number of the currently released subversion of the software to be released; and defect identifier(s) of defect(s) to be resolved in the currently released subversion of the software to be released.

Optionally, if the method is applied to the operator, the method further comprises: determining, based on test identifier(s) in a local context, test case(s) corresponding to the test identifier(s); and parsing test topology information corresponding to the test case(s), wherein the test topology information is used for root cause analysis of test anomalies by the operator and/or the provider.

Optionally, if the method is applied to the provider, the method further comprises: receiving, during a software onboarding phase, a subscription notification message sent by the operator, wherein the subscription notification message comprises the context identifier; wherein the sending the local interaction context to the communication peer comprises: sending a software update message to the operator based on the subscription notification message, wherein the software update message comprises the local interaction context.

Optionally, if the method is applied to the provider, the performing processing based on the interaction context of the communication peer to acquire a processing result, and obtaining a local interaction context according to the processing result comprises: retrieving a first defect identifier and/or a first test identifier in the interaction context of the communication peer, and performing processing based on the first defect identifier and/or the first test identifier; and obtaining a second defect identifier and/or a second test identifier according to a processing result, and recording the second defect identifier and/or the second test identifier in a local context, and generating the local interaction context.

Optionally, if the method is applied to the provider, the local interaction context further comprises: information of a currently released subversion of the software to be released; and one or more identifiers of one or more test cases corresponding to the subversion; wherein the information of the currently released subversion of the software to be released comprises one or more of the following: a version number of the currently released subversion of the software to be released; and defect identifier(s) of defect(s) to be resolved in the currently released subversion of the software to be released.

Optionally, the method further comprises: verifying the interaction context of the communication peer; wherein the performing processing based on the interaction context of the communication peer to acquire a processing result, and obtaining a local interaction context according to the processing result comprises: if the verification of the interaction context of the communication peer is passed, performing processing based on the interaction context of the communication peer to acquire the processing result, and obtaining the local interaction context according to the processing result.

Optionally, the method further comprises: retrieving a digest of the local interaction context, and signing the digest using a private key; wherein the sending the local interaction context to the communication peer comprises: sending the signed local interaction context to the communication peer.

In a second aspect, an embodiment of the present disclosure further provides an interaction context management apparatus applied to a provider or an operator, comprising: an acquisition module, configured to retrieve an interaction context of a communication peer, wherein the interaction context of the communication peer comprises a context identifier; a processing module, configured to perform processing based on the interaction context of the communication peer to acquire a processing result, and obtain a local interaction context according to the processing result; and a sending module, configured to send the local interaction context to the communication peer, wherein the local interaction context comprises the context identifier; wherein the communication peer of the provider is the operator, and the communication peer of the operator is the provider.

Optionally, version identifier(s) is/are used to identify version information of software to be released; defect identifier(s) is/are used to identify defect(s) expected to be resolved in a current version of the software to be released, or to identify defect(s) encountered during testing or maintenance processes of the current version of the software to be released; and test identifier(s) is/are used to identify test case(s) that aim to verify resolved defect(s) in the current version of the software to be released, or to identify test case(s) that are used to verify the existence of defect(s) in the current version of the software to be released.

Optionally, if the apparatus is applied to the operator, the apparatus further comprises: a sending module, configured to send a subscription notification message to the provider during a software onboarding phase, wherein the subscription notification message comprises the context identifier.

Optionally, the processing module is further configured to: receive a software update message sent by the provider during the software onboarding phase, wherein the software update message comprises the interaction context of the communication peer; validate the context identifier in the software update message; and after the validation of the context identifier is passed, update the local context, and generate the local interaction context.

Optionally, the processing module is further configured to: if it is determined, based on the version identifier(s) in the interaction context of the communication peer, that the current version is a testing version of a target version of the software to be released and the interaction context of the communication peer comprises the defect identifier(s) and the test identifier(s), record the test identifier(s) in the local context and populate test case(s) corresponding to the target version, and generate the local interaction context.

Optionally, the processing module is further configured to: obtain a software package sent by the provider during the software onboarding phase, wherein the software package comprises the interaction context of the communication peer, and the interaction context of the communication peer comprises the version identifier(s), the defect identifier(s), and the test identifier(s); validate the version identifier(s) in the software package; after the validation of the version identifier(s) is passed, determine the validity of a test case template corresponding to the test identifier; and after verification of the validity of the test case template is passed, update a context status in a local context, and generate the local interaction context.

Optionally, if the apparatus is applied to the operator, the apparatus further comprises: a first determination module, configured to determine an iteration type of a current pipeline based on the version identifier(s) in the interaction context of the communication peer.

Optionally, the first determination module is further configured to: if the version identifier(s) in the interaction context of the communication peer indicates that the current version is a target version for delivery of the software to be released, the iteration type of the current pipeline is a testing-deployment-feedback pipeline; and if the version identifier(s) in the interaction context of the communication peer indicates that the current version is a testing version of the software to be released, the iteration type of the current pipeline is a testing-feedback pipeline.

Optionally, if the apparatus is applied to the operator, the processing module is further configured to: verify, during a testing phase, the completeness of one or more test case sets corresponding to the test identifier(s) based on the test identifier(s) in the interaction context of the communication peer; if the verification of the completeness of the one or more test case sets corresponding to the test identifier(s) is passed, test the one or more test case sets; if the test is passed, update a context status in a local context to accepted, and generate the local interaction context; and if the test is unsuccessful, record the defect identifier(s) in the local context, and generate the local interaction context.

Optionally, if the apparatus is applied to the operator, the processing module is further configured to: during a deployment phase, if a software upgrade is successful, update the context status in a local context to deployed, and generate the local interaction context; and if the software upgrade is not successful, add defect identifier(s) to the local context, and generate the local interaction context.

Optionally, if the apparatus is applied to the operator, the processing module is further configured to: during a feedback phase, send the local interaction context to the provider, wherein the local interaction context comprises the version identifier(s), the defect identifier(s), and the test identifier(s).

Optionally, if the apparatus is applied to the operator, the interaction context of the communication peer further comprises: information of a currently released subversion of the software to be released; and one or more identifiers of one or more test cases corresponding to the subversion; wherein the information of the currently released subversion of the software to be released comprises one or more of the following: a version number of the currently released subversion of the software to be released; and defect identifier(s) of defect(s) to be resolved in the currently released subversion of the software to be released.

Optionally, if the apparatus is applied to the operator, the apparatus may further comprise: a second determination module, configured to determine, based on test identifier(s) in a local context, test case(s) corresponding to the test identifier(s); and a parsing module, configured to parse test topology information corresponding to the test case(s), wherein the test topology information is used for root cause analysis of test anomalies by the operator and/or the provider.

Optionally, if the apparatus is applied to the provider, the apparatus further comprises: a reception module, configured to receive, during a software onboarding phase, a subscription notification message sent by the operator, wherein the subscription notification message comprises the context identifier; and the sending module, configured to send a software update message to the operator based on the subscription notification message, wherein the software update message comprises the local interaction context.

Optionally, if the apparatus is applied to the provider, the processing module is further configured to: retrieve a first defect identifier and/or a first test identifier in the interaction context of the communication peer, and perform processing based on the first defect identifier and/or the first test identifier; and obtain a second defect identifier and/or a second test identifier according to a processing result, and record the second defect identifier and/or the second test identifier in a local context, and generate the local interaction context.

Optionally, if the apparatus is applied to the provider, the local interaction context further comprises: information of a currently released subversion of the software to be released; and one or more identifiers of one or more test cases corresponding to the subversion; wherein the information of the currently released subversion of the software to be released comprises one or more of the following: a version number of the currently released subversion of the software to be released; and defect identifier(s) of defect(s) to be resolved in the currently released subversion of the software to be released.

Optionally, the apparatus further comprises: a verification module, configured to verify the interaction context of the communication peer; and the acquisition module, further configured to, if the verification of the interaction context of the communication peer is passed, perform processing based on the interaction context of the communication peer to acquire the processing result, and obtain the local interaction context according to the processing result.

Optionally, the apparatus may further comprise: a signature module, configured to retrieve a digest of the local interaction context, and sign the digest using a private key; and the first sending module, further configured to send the signed local interaction context to the communication peer.

In a third aspect, an embodiment of the present disclosure further provides an interaction context management apparatus applied to a provider or an operator, comprising a processor and a transceiver; wherein the processor is configured to retrieve an interaction context of a communication peer, wherein the interaction context of the communication peer comprises a context identifier; and perform processing based on the interaction context of the communication peer to acquire a processing result, and obtain a local interaction context according to the processing result; and the transceiver is configured to send the local interaction context to the communication peer, wherein the local interaction context comprises the context identifier; wherein the communication peer of the provider is the operator, and the communication peer of the operator is the provider.

Optionally, version identifier(s) is/are used to identify version information of software to be released; defect identifier(s) is/are used to identify defect(s) expected to be resolved in a current version of the software to be released, or to identify defect(s) encountered during testing or maintenance processes of the current version of the software to be released; and test identifier(s) is/are used to identify test case(s) that aim to verify resolved defect(s) in the current version of the software to be released, or to identify test case(s) that are used to verify the existence of defect(s) in the current version of the software to be released.

Optionally, if the apparatus is applied to the operator, the processor is further configured to: send a subscription notification message to the provider during a software onboarding phase, wherein the subscription notification message comprises the context identifier.

Optionally, the processor is further configured to: receive a software update message sent by the provider during the software onboarding phase, wherein the software update message comprises the interaction context of the communication peer; validate the context identifier in the software update message; and after the validation of the context identifier is passed, update a local context, and generate the local interaction context.

Optionally, the processor is further configured to: if it is determined, based on the version identifier(s) in the interaction context of the communication peer, that the current version is a testing version of a target version of the software to be released and the interaction context of the communication peer comprises the defect identifier(s) and the test identifier(s), record the test identifier(s) in the local context and populate test case(s) corresponding to the target version, and generate the local interaction context.

Optionally, the processor is further configured to: obtain a software package sent by the provider during the software onboarding phase, wherein the software package comprises the interaction context of the communication peer, and the interaction context of the communication peer comprises the version identifier(s), the defect identifier(s), and the test identifier(s); validate the version identifier(s) in the software package; after the validation of the version identifier(s) is passed, determine the validity of a test case template corresponding to the test identifier; and after verification of the validity of the test case template is passed, update a context status in a local context, and generate the local interaction context.

Optionally, if the apparatus is applied to the operator, the processor is further configured to: determine an iteration type of a current pipeline based on the version identifier(s) in the interaction context of the communication peer.

Optionally, the processor is further configured to: if the version identifier(s) in the interaction context of the communication peer indicates that the current version is a target version for delivery of the software to be released, the iteration type of the current pipeline is a testing-deployment-feedback pipeline; and if the version identifier(s) in the interaction context of the communication peer indicates that the current version is a testing version of the software to be released, the iteration type of the current pipeline is a testing-feedback pipeline.

Optionally, if the apparatus is applied to the operator, the processor is further configured to: verify, during a testing phase, the completeness of one or more test case sets corresponding to the test identifier(s) based on the test identifier(s) in the interaction context of the communication peer; if the verification of the completeness of the one or more test case sets corresponding to the test identifier(s) is passed, test the one or more test case sets; if the test is passed, update a context status in a local context to accepted, and generate the local interaction context; and if the test is unsuccessful, record the defect identifier(s) in the local context, and generate the local interaction context.

Optionally, if the apparatus is applied to the operator, the processor is further configured to: during a deployment phase, if a software upgrade is successful, update a context status in a local context to deployed, and generate the local interaction context; and if the software upgrade is not successful, add defect identifier(s) to the local context, and generate the local interaction context.

Optionally, the processor is further configured to: during a feedback phase, send the local interaction context to the provider, wherein the local interaction context comprises the version identifier(s), the defect identifier(s), and the test identifier(s).

Optionally, if the apparatus is applied to the operator, the interaction context of the communication peer further comprises: information of a currently released subversion of the software to be released; and one or more identifiers of one or more test cases corresponding to the subversion; wherein the information of the currently released subversion of the software to be released comprises one or more of the following: a version number of the currently released subversion of the software to be released; and defect identifier(s) of defect(s) to be resolved in the currently released subversion of the software to be released.

Optionally, if the apparatus is applied to the operator, the processor is further configured to: determine, based on test identifier(s) in a local context, test case(s) corresponding to the test identifier(s); and parse test topology information corresponding to the test case(s), wherein the test topology information is used for root cause analysis of test anomalies by the operator and/or the provider.

Optionally, if the apparatus is applied to the provider, the processor is further configured to: receive, during a software onboarding phase, a subscription notification message sent by the operator, wherein the subscription notification message comprises the context identifier; and send a software update message to the operator based on the subscription notification message, wherein the software update message comprises the local interaction context.

Optionally, if the apparatus is applied to the provider, the processor is further configured to: retrieve a first defect identifier and/or a first test identifier in the interaction context of the communication peer, and perform processing based on the first defect identifier and/or the first test identifier; and obtain a second defect identifier and/or a second test identifier according to a processing result, and record the second defect identifier and/or the second test identifier in a local context, and generate the local interaction context.

Optionally, if the apparatus is applied to the provider, the local interaction context further comprises: information of a currently released subversion of the software to be released; and one or more identifiers of one or more test cases corresponding to the subversion; wherein the information of the currently released subversion of the software to be released comprises one or more of the following: a version number of the currently released subversion of the software to be released; and defect identifier(s) of defect(s) to be resolved in the currently released subversion of the software to be released.

Optionally, the processor is further configured to: verify the interaction context of the communication peer; and if the verification of the interaction context of the communication peer is passed, perform processing based on the interaction context of the communication peer to acquire the processing result, and obtain the local interaction context according to the processing result.

Optionally, the processor is further configured to: retrieve a digest of the local interaction context, and sign the digest using a private key; and send the signed local interaction context to the communication peer.

In a fourth aspect, an embodiment of the present disclosure further provides a communication device, comprising: a memory, a processor, and a program stored on the memory and executable on the processor, wherein the processor, when executing the program, implements the steps in the interaction context management apparatus described above.

In a fifth aspect, an embodiment of the present disclosure further provides a computer-readable storage medium, configured to store a program, wherein when the program is executed by a processor, the steps in the interaction context management apparatus described above are implemented.

In a sixth aspect, an embodiment of the present disclosure further provides an interaction context management system, comprising a provider and an operator; wherein the provider is configured to provide software to an operator to obtain an interaction context of the provider, and send the interaction context of the provider to the operator; and perform processing based on feedback information sent by the operator to obtain a local interaction context of the provider, and send the local interaction context of the provider to the operator; and the operator is configured to process the software with reference to the interaction context of the provider to obtain feedback information and send the feedback information to the provider, wherein the feedback information comprises the local interaction context obtained by the operator.

In the embodiments of the present disclosure, in the process of communication between the provider or operator and the corresponding communication peer thereof, both parties exchange the interaction context corresponding to the same context identifier. Thus, both parties may negotiate based on the same interaction context, so as to achieve optimization iteration that allows multiple trial-and-error attempts, repeated debugging, and flexible orchestration. Therefore, the solution of the embodiments of the present disclosure can enhance the flexibility of managing an interaction process between a provider and an operator.

### BRIEF DESCRIPTION OF THE DRAWINGS

FIG. 1A and FIG. 1B are respectively schematic diagrams of a DevOps framework supporting communication operation management.
FIG. 2 is a schematic diagram of an interaction context management system according to an embodiment of the present disclosure.
FIG. 3 is a flowchart of an interaction context management method according to an embodiment of the present disclosure.
FIG. 4 is a flowchart of a further interaction context management method according to an embodiment of the present disclosure.
FIG. 5 is a structural diagram of an interaction context management apparatus according to an embodiment of the present disclosure.
FIG. 6 is a structural diagram of a further interaction context management apparatus according to an embodiment of the present disclosure.
FIG. 7 is a structural diagram of an interaction context management device according to an embodiment of the present disclosure.
FIG. 8 is a structural diagram of a further interaction context management device according to an embodiment of the present disclosure.

### DETAILED DESCRIPTION

In embodiments of the present disclosure, the term "and/or" is to describe the associations of associated objects, indicating that there can be three kinds of relationships. For example, A and/or B can indicate three situations in which A exists alone, A and B exist simultaneously, or B exists alone. The character "/" generally indicates that the associated objects before and after this character are in an "or" relationship.

The term "a plurality of" in the embodiments of the present disclosure refers to two or more, and other quantifiers are similar thereto. The use of the terms such as first, second, and third does not indicate any order. These terms may be interpreted as designations. In the above embodiments, unless explicitly stated otherwise, the steps should not be construed as limiting the order of execution.

The technical solutions in the embodiments of the present disclosure will be clearly and completely described below with reference to the drawings in the embodiments of the present disclosure. The embodiments described are only some, but not all, of the embodiments of the present disclosure. On the basis of the embodiments in the present disclosure, all other embodiments obtained by a person of ordinary skill in the art without involving any inventive effort fall within the scope of protection of the present disclosure.

In view of the deficiencies in the prior art, an embodiment of the present disclosure provides an interaction context management method. In the method, a context for Development and Operations (DevOps) oriented to communication network software is managed. Through collaboration between a provider and an operator, for example for software with a same delivery target, different iterations are optimized, and a unified context is maintained, so that a closed loop of onboarding, testing, operation and maintenance, monitoring, and feedback is optimized in a targeted manner by using existing knowledge in a subsequent process, and security enhancement is performed on cross-organizational information exchange and process coordination.

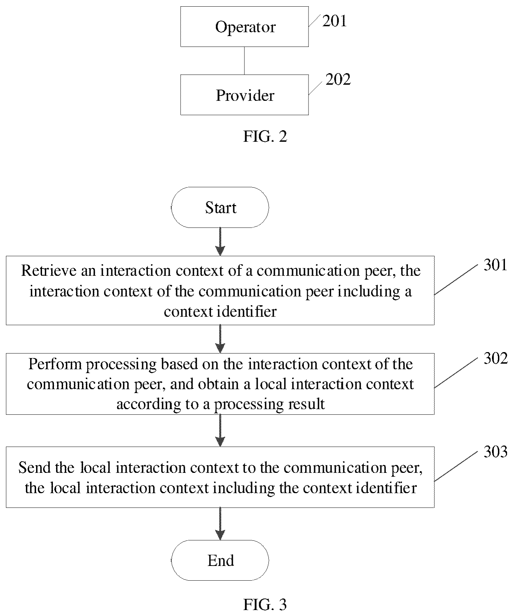

Referring to FIG. 2, FIG. 2 is a schematic diagram of an interaction context management system according to an embodiment of the present disclosure. The system may include a provider 201 and an operator 202.

The provider 201 is configured to provide software to the operator to obtain an interaction context of the provider, and send the interaction context of the provider to the operator; and perform processing based on feedback information sent by the operator, to obtain a local interaction context of the provider, and send the local interaction context of the provider to the operator.

The operator 202 is configured to process the software with reference to the interaction context of the provider to obtain feedback information and send the feedback information to the provider. The feedback information includes the local interaction context obtained by the operator.

The operator may include an operator DevOps server, etc., and the operator may include a pre-production environment, a production environment, etc.

In the embodiments of the present disclosure, the interaction context refers to basic information and a current state jointly maintained by the provider or the operator for certain software. The basic information includes: a context identifier, an operator identifier, a software specification identifier, etc., and the current state includes: a pipeline state (new, delivered, accepted, deployed, decommissioned, etc.) and a pipeline record (optional). The pipeline record includes basic information (operation type, operation time, operation result, etc.) and optional auxiliary information of a currently executed operation (onboarding, test, deployment, monitoring, feedback).

The implementation process of the present disclosure will be described in detail below in conjunction with different embodiments.

Referring to FIG. 3, FIG. 3 is a flowchart of an interaction context management method according to an embodiment of the present disclosure. The method is applied to an operator. As shown in FIG. 3, the method includes the following steps:

At Step 301, an interaction context of a communication peer is retrieved, the interaction context of the communication peer including a context identifier.

The operator may include an operator DevOps server, etc., and the communication peer of the operator may be a provider.

The interaction context of the communication peer may be retrieved from the provider, or may be newly generated by the operator. The context identifier is configured to uniquely identify a certain interaction context, for example, the context identifier may be a context number or the like.

During a software onboarding phase, the operator sends a subscription notification message to the provider, where the subscription notification message includes the context identifier. That is, when the operator subscribes to a certain provider software for the first time, the two parties negotiate to create a unique context identifier that is carried in all subsequent information exchanges between the two parties. Specifically, the operator may use the current time, identifiers of both parties (the operator's public key certificate public identifier and the provider's public key certificate public identifier), and a requirement specification (for example, a digest of the software function specification) as inputs, to generate the context identifier using a digest algorithm.

In the embodiments of the present disclosure, the interaction context of the communication peer further includes one or more of the following (1) to (3).
(1) Version identifier(s), which is configured to identify version information of software to be released. The version identifier(s) is generated when the provider releases a new software delivery/test (or temporary) version. The version identifier(s) is generated by the provider, and specifically, the version identifier(s) is configured to identify a target version (mandatory) and a test (or temporary) version (optional), to indicate whether a currently released software version is a delivery version for production deployment or a temporary version for a repair verification test for a specific defect (set). The operator references the version identifier(s) of the current delivery version in a feedback message, to populate it into the interaction context.
(2) Defect identifier(s), which is configured to identify defect(s) expected to be resolved in the current version of the software to be released: the defect identifier(s) is populated by the provider into the interaction context in an iteration optimization release reminder message, representing defect identifier(s) (set) expected to be resolved in the current delivery version.
(3) Test identifier(s), which is configured to identify test case(s) that aim to verify resolved defect(s) in the current version of the software to be released: the test identifier(s) is populated by the provider into the interaction context in the iteration optimization release reminder message, including a test case identifier(s) (set) for targeted verification testing of defect(s) expected to be resolved in the current delivery version. The test identifier(s) is primarily suitable for temporary versions released by the vender.

Similarly, the interaction context sent by the operator to the provider may also include the version identifier(s), the defect identifier(s), and the test identifier(s). The difference is that in this case, the defect identifier(s) and the test identifier(s) are generated by the operator. The defect identifier(s) is configured to identify defect(s) encountered during testing or maintenance processes of the current version of the software to be released: the defect identifier(s) is populated by the operator into the interaction context in an information feedback message, representing defect identifier(s) (set) discovered during the testing/operation and maintenance processes of the current version. The test identifier(s) is configured to identify test case(s) that are used to verify the existence of defect(s) in the current version of the software to be released: the test identifier(s) is populated by the operator into the interaction context in an information feedback message, including a verification test case identifier(s) (set) corresponding to the defect(s) discovered during the testing/operation and maintenance processes of the current version. The test identifier(s) is primarily suitable for the operator to feed back issues with the software.

When generating the defect identifier(s), the operator or the provider may generate the defect identifier(s) in a random manner or a known agreed reference manner. For example, in the random manner, the defect identifier(s) may be generated using a digest algorithm based on current time, context identifier, and/or issue description text as inputs. In the known agreed reference manner, identifiers known to both parties, such as a known defect identifier(s) and/or a known test case identifier(s), may be referenced to generate defect identifier(s).

When generating the test identifier, the operator or the provider may generate the test identifier(s) in a random manner or a known agreed reference manner. For example, in the random manner, the test identifier(s) may be generated using a digest algorithm based on current time, context identifier, and/or issue description text as inputs. In the known agreed reference manner, identifiers known to both parties, such as a known test case identifier(s) and/or an agreed test case identifier(s), may be directly referenced to generate test identifier(s). For example, for a known test case(s) or a test case(s) that has been agreed upon by both parties through message exchanges during previous interactions, the identifiers known to the two parties, such as a known test case identifier(s) and/or an agreed test case identifier(s), are directly referenced during feedback/release.

While the test identifier(s) is provided, a test case template may also be provided as part of auxiliary feedback information/software release information.

In the embodiments of the present disclosure, by introducing the version identifier(s), the defect identifier(s), or the test identifier(s) into the interaction context, the operator and the provider can implement a defect tracking and test negotiation mechanism, so that after an issue is recognized based on the same interaction context, the two parties can negotiate to create optimization iteration that allows multiple trial-and-error attempts, repeated debugging, and flexible orchestration.

Optionally, in the embodiments of the present disclosure, the interaction context of the communication peer may also be verified. For example, the legitimacy of the interaction context of the communication peer, and whether the interaction context is an interaction context specific to the current provider and the operator, etc., are checked. After the verification is passed, the following process may be performed, otherwise the process may be ended.

At Step 302, processing is performed based on the interaction context of the communication peer to acquire a processing result, and a local interaction context is obtained according to the processing result.

With reference to FIG. 1A or FIG. 1B, after software is delivered to an operator environment, a process of verification, testing, deployment, and continuous monitoring after the software is released to a production environment needs to be performed, and the process involves five phases: a onboarding phase, a testing phase, a deployment phase, an operation & monitoring phase, and a feedback phase. Therefore, in different phases, the operator may obtain the local interaction context based on the operations of the operator. Throughout the above process, the operator may perform operations such as recording on the basis of a same interaction context, that is, in a specific phase, recording may be performed on the basis of the interaction context obtained in the previous phase, so as to obtain a local interaction context, thereby making the obtained interaction context more accurate. Certainly, in each phase, an interaction context corresponding to the phase may also be obtained separately, and is used as the local interaction context.

For the operator, the operator may maintain a local context (which may also be referred to as an interaction context), and the local context may be an interaction context of the communication peer, or may be another interaction context. That is, the operator may perform operations such as recording on the basis of the interaction context of the communication peer, and generating the local interaction context, or may perform operations such as recording on the basis of other interaction contexts of the local context (different from the interaction context of the communication peer) with reference to the retrieved interaction context of the communication peer according to the processing result, and generating the local interaction context.

Specifically, during the onboarding phase, the operator may subscribe to a software release/update notification, and carry a context identifier. If there is a software release or update, the operator may receive a software update message sent by the provider, where the software update message includes the interaction context of the communication peer. The interaction context of the communication peer may further carry the version identifier(s). Then, the operator retrieves the context identifier in the interaction context of the communication peer, and validates the context identifier. After the validation of the context identifier is passed, a local context is updated, and the local interaction context is generated.

For example, when the context identifier is validated, the operator may determine, based on the context identifier, whether a corresponding interaction context exists locally, or whether a provider corresponding to the context identifier is legitimate, etc. After receiving the software update message, the operator retrieves the context identifier (including the version identifier(s)) and an updated software storage address, and after locally searching for the context identifier and validating the context identifier, retrieves the existing context or generates an initial context (state: new) for the software. Then, the operator performs parsing and on-demand updating of the version information and test information in a local context record. Specifically, if it is determined, based on the version identifier(s) in the interaction context of the communication peer, that the current version is a testing version of a target version of the software to be released and the interaction context of the communication peer includes the defect identifier(s) and the test identifier(s), the operator records the test identifier(s) in the local context, and populates test case(s) corresponding to the target version, and generates the local interaction context. That is, the operator parses the version identifier(s) in the context identifier, and if the version is a temporary testing version for a specific target version, a target version context record is updated locally, and whether the interaction context of the communication peer includes the defect identifier(s) provided by the provider is further parsed. If there is defect identifier(s), whether the interaction context of the communication peer includes the test identifier(s) provided by a provider is further parsed. If there is no defect identifier, subsequent processing may be performed. If it is determined that the interaction context of the communication peer includes the test identifier(s) provided by the provider, the test identifier(s) provided by the provider is populated into the current local context, and a test case(s) executed in the last iteration for the target version is populated. If there is no test identifier, subsequent processing may be performed. Thereafter, the operator may apply to a provider artifact library for downloading an updated software package.

During the software onboarding (software pull) phase, the operator may obtain a software package sent by the provider, where the software package includes the interaction context of the communication peer (that is, the provider), and the interaction context of the communication peer includes the version identifier(s), the defect identifier(s), and the test identifier(s). A digest and a context identifier of the software package may be signed by the provider using a private key. Then, the operator may perform validation based on the version identifier(s), for example, check consistency between the version identifier(s) in the software package and the version identifier(s) in the local context. After the validation of the version identifier(s) is passed, the operator determines the validity of the test case template corresponding to the test identifier, for example, determines whether the test case template is executable, or whether the test case template is available, or whether the state of the test case template is invalid or inexecutable. After verification of the validity of the test case template is passed (for example, executable, the state is valid, etc.), a context status in the local context is updated (for example, the state is updated to 'onboarded'), and the local interaction context is generated.

For example, during an orchestration phase, the operator determines an iteration type of a current pipeline based on the version identifier(s) in the interaction context of the communication peer. Specifically, if the version identifier(s) in the interaction context of the communication peer indicates that the current version is a target version for delivery of the software to be released, the iteration type of the current pipeline is a testing-deployment-feedback pipeline. If the version identifier(s) in the interaction context of the communication peer indicates that the current version is a testing version of the software to be released, the iteration type of the current pipeline is a testing-feedback pipeline. That is, the operator may determine the step following the current step based on the version identifier(s), thereby improving the processing efficiency.

During the testing phase, the operator verifies, based on the test identifier(s) in the interaction context of the communication peer, the completeness of one or more test case sets corresponding to the test identifier. If the verification of the completeness of the one or more test case sets corresponding to the test identifier(s) is passed, the one or more test case sets is tested, otherwise, error reporting is performed. If the test on the one or more test case sets is passed, the context status in the local context is updated to 'accepted', and the next step of the current pipeline is executed to generate the local interaction context. If the test is unsuccessful, the defect identifier(s) in the local context is recorded, and the local interaction context is generated.

For example, during the testing phase, a general test framework is configured to check the completeness, such as whether the test case is complete and accurate, of the one or more test case sets referenced by the test identifier(s) in the interaction context. If the check is passed, a test execution system is invoked to execute a test, otherwise an error is reported to the DevOps server. If the test on the test case is passed, the context status is updated to accepted, and the next step of the pipeline is performed. The next step depends on the iteration type of the current pipeline determined above, and the next step may be notifying a network management system to perform software upgrade deployment or directly enter the feedback phase. If the test on the test case fails, the operator checks error causes and adds the error causes to the defect identifier(s) set in the interaction context. If a certain specific test fails, a data processing component is triggered to perform a necessary data processing procedure such as test data desensitization, so as to avoid the influence of test data corresponding to the specific test on the test process.

During the deployment phase, the operator notifies the network management system to perform software upgrade deployment. If the software upgrade succeeds, the operator updates the context status in the local context to 'deployed', and generates the local interaction context. If the software upgrade is not successful, the operator adds defect identifier(s) to the local context, and generates the local interaction context, for example, the operator adds information of abnormal deployment to the defect identifier set in the context, and triggers the data processing component to perform necessary data processing procedures such as test data desensitization.

During the feedback phase, the operator sends the local interaction context to the provider, where the local interaction context includes the version identifier(s), the defect identifier(s), and the test identifier(s). The local interaction context may be a final interaction context obtained through the foregoing several phases.

In practical applications, the provider may also reissue targeted updates after completing software update optimization based on the feedback of the operator. At this time, for example, in the iteration phase, the interaction context of the communication peer further includes: information of a currently released subversion of the software to be released; and one or more identifiers of one or more test cases corresponding to the subversion; where the information of the currently released subversion of the software to be released includes one or more of the following:
a version number of the currently released subversion of the software to be released; and defect identifier(s) of defect(s) to be resolved in the currently released subversion of the software to be released.

Through the above process, the update iteration and optimization of the software may be implemented.

At Step 303, the local interaction context is sent to the communication peer, where the local interaction context includes the context identifier.

In the embodiments of the present disclosure, in the process of communication between the provider or operator and the communication peer, both parties exchange the interaction context corresponding to the same context identifier. Thus, both parties may negotiate based on the same interaction context, so as to achieve optimization iteration that allows multiple trial-and-error attempts, repeated debugging, and flexible orchestration. Therefore, the solution of the embodiments of the present disclosure can enhance the flexibility of managing an interaction process between a provider and an operator.

In the embodiments of the present disclosure, in order to achieve traceability in the operator's internal pipeline management, a unique and non-tamperable pipeline (context) execution record is created for each network software entering the pipeline. Meanwhile, it is agreed, between the test framework and the data processing component inside the operator pipeline, to use a test case description specification that meets the standard, so that the data processing component can parse, by querying a test case template corresponding to test identifier(s) in a context, test topology information (a tested network element in a test environment and test environment networking information) described in the test case template, to locate a root cause of a fault/anomaly, thereby directionally feeding back test data to a network element provider with issues after confirming a cause of a test failure.

Specifically, based on the test identifier(s) in the local context, test case(s) corresponding to the test identifier(s) may be determined, and test topology information corresponding to the test case(s) can be parsed, where the test topology information is used for the operator and/or the provider to perform root cause analysis on test anomalies. In this way, the efficiency and accuracy of testing, analysis, and feedback on the operator side can be improved.

Each record in each phase consists of two parts: a body part and a digest signature part. The body part includes a current latest execution record, and the digest signature is generated by a current-process executor signing the digest of the content of the body part using the private key of the current-process executor, and is used for the third party to check the integrity of the content of the body part and the authenticity of the content from the current-phase executor.

After receiving a process task and before executing a corresponding task, the current-process executor (test framework/network management system/data processing component) first verifies the content integrity and source authenticity of the execution record by checking the digest signature of the execution record, and once an anomaly (process anomaly, signature anomaly, etc.) that is inconsistent with expectations is found, the current-process executor refuses to proceed with the current process and reports an execution check error. If no anomalies are found, the current-process executor continues to execute the corresponding task, writes an execution result to the end of the execution record in an appended form, and finally, re-extracts a digest value from the updated execution record and signs using the private key of the current-process executor.

Therefore, in the foregoing process, after the local context of each phase is retrieved, the local context may be subjected to digest value extraction, and signed using the corresponding private key of each phase.

Optionally, in the embodiments of the present disclosure, a digest of the local interaction context may also be retrieved, the digest may be signed using a private key, and the signed local interaction context may be sent to the communication peer. In this way, the security of communication can be ensured.

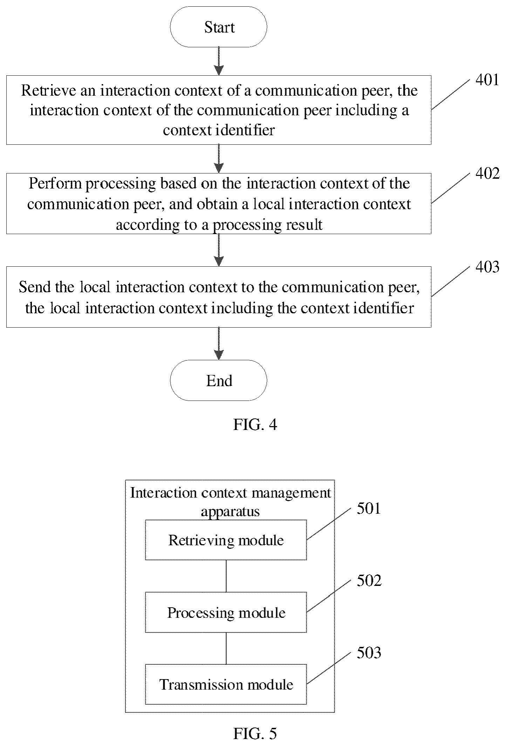

Referring to FIG. 4, FIG. 4 is a flowchart of an interaction context management method according to an embodiment of the present disclosure. The method is applied to a provider. As shown in FIG. 4, the method includes the following steps.

At Step 401, an interaction context of a communication peer is retrieved, the interaction context of the communication peer including a context identifier.

The communication peer of the provider is an operator. The operator may include an operator DevOps server.

The interaction context refers to basic information and a state jointly maintained by the provider or the operator for certain software. The basic information includes: a context identifier, an operator identifier, a software specification identifier, etc., and the current status includes: a pipeline state (new, delivered, accepted, deployed, decommissioned, etc.) and a pipeline record (optional). The pipeline record includes basic information (operation type, operation time, operation result, etc.) and optional auxiliary information of a currently executed operation (onboarding, test, deployment, monitoring, feedback). The interaction context of the communication peer may be retrieved from the operator, or may be newly generated by the provider.

The context identifier is configured to uniquely identify a certain interaction context. During a software onboarding phase, the operator sends a subscription notification message to the provider, where the subscription notification message includes the context identifier. That is, when the operator subscribes to software from a certain telecommunication provider for the first time, the two parties negotiate to create a unique context identifier. The context identifier is carried in all subsequent information exchanges between the two parties. Specifically, the operator uses the current time, identifiers of both parties (the operator's public key certificate public identifier and the provider's public key certificate public identifier), and a requirement specification (for example, a digest of the software function specification) as inputs, so as to generate the context identifier by using a digest algorithm.

In the embodiments of the present disclosure, the interaction context of the communication peer further includes one or more of the following items (1) to (3).
(1) Version identifier(s), which is configured to identify version information of software to be released. The version identifier(s) is generated by the provider, and specifically, the version identifier(s) is configured to identify a target version (mandatory) and a test (or temporary) version (optional), to indicate whether a currently released software version is a delivery version for production deployment or a temporary version for a repair verification test for a specific defect(s) (set). The operator references the version identifier(s) of the current delivery version in an information feedback message, to populate it into the interaction context.
(2) Defect identifier(s), which is configured to identify defect(s) encountered during testing or maintenance processes of the current version of the software to be released: the defect identifier(s) is populated by the operator into the interaction context in an information feedback message, representing defect identifier(s) (set) discovered during the testing/operation and maintenance processes of the current version.
(3) Test identifier(s), which is configured to identify test case(s) that are used to verify the existence of defect(s) in the current version of the software to be released: the test identifier(s) is populated by the operator into the interaction context in the information feedback message, including a verification test case identifier(s) (set) corresponding to the defect(s) discovered during the testing/operation and maintenance processes of the current version.

As mentioned above, the interaction context sent by the provider to the operator may also include the above identifiers, except that the defect identifier(s) and the test identifier(s) are generated by the provider. For the specific meanings of the identifiers, reference may be made to the description of the foregoing embodiments.

When generating the defect identifier(s), the operator or the provider may generate the defect identifier(s) in a random manner or a known agreed reference manner. For example, in the random manner, the defect identifier(s) may be generated by using a digest algorithm based on current time, context identifier, or issue description text as an input. In the known agreed reference manner, an identifier(s) known to both parties, such as a known defect identifier(s) and/or a known test case identifier(s), may be referenced to generate defect identifier(s).

When generating the test identifier, the operator or the provider may generate the test identifier(s) in a random manner or a known agreed reference manner. For example, in the random manner, the test identifier(s) may be generated by using a digest algorithm based on current time, context identifier, or issue description text as an input. In the known agreed reference manner, an identifier(s) known to both parties, such as a known test case identifier(s) and/or an agreed test case identifier(s), may be directly referenced to generate test identifier(s). For example, for a known test case(s) or a test case(s) that has been agreed upon by both parties through message exchanges during previous interactions, an identifier(s) known to the two parties, such as a known test case identifier(s) and/or an agreed test case identifier(s), may be directly referenced during feedback/release.

Besides the test identifier, a test case template may also be provided as part of auxiliary feedback information/software release information.

In the embodiments of the present disclosure, by introducing the version identifier(s), the defect identifier(s), or the test identifier(s) into the interaction context, the operator and the provider can implement a defect tracking and test negotiation mechanism, so that after an issue is discovered based on the same interaction context, the two parties can negotiate to create optimization iteration that allows multiple trial-and-error attempts, repeated debugging, and flexible orchestration.

Optionally, in the embodiments of the present disclosure, the interaction context of the communication peer may also be verified. For example, the legitimacy of the interaction context of the communication peer, and whether the interaction context is an interaction context specific to the current provider and the operator, etc., are checked. After the verification is passed, the following process may be performed, otherwise the process may be ended.

At Step 402, processing is performed based on the interaction context of the communication peer to acquire a processing result, and a local interaction context is obtained according to the processing result.

Since the software test is mainly performed by the operator, the provider mainly retrieves a first defect identifier and/or a first test identifier in the interaction context of the communication peer, and performs processing based on the first defect identifier and/or the first test identifier. For example, the provider may locally perform test defect scenario reconstruction, root cause locating, code optimization, and test verification based on the first defect identifier and/or the first test identifier in the received interaction context. Then, the provider may obtain a second defect identifier and/or a second test identifier according to a processing result, and record the second defect identifier and/or the second test identifier in a local context, and generate the local interaction context.

The second defect identifier may be recorded in relation to the first defect identifier. For example, for the defect identifier (set) discovered during the testing/operation and maintenance process of the current version represented by the first defect identifier, the second defect identifier may identify which defects in the defect identifier (set) are solved by the provider. The second test identifier may be recorded in relation to the first test identifier. For example, the second test identifier is configured to identify which test cases are optimized by the provider in the verification test cases (set) corresponding to the defects found in the test/operation and maintenance process for the current version.

The provider may locate problematic test cases or defects based on the first defect identifier and/or the first test identifier, and perform updating, modification, version iteration, etc., on the problematic test cases or defects.

For example, in an iteration phase, the local interaction context further includes: information of a currently released subversion of the software to be released, and one or more identifiers of one or more test cases corresponding to the subversion. The information of the currently released subversion of the software to be released includes one or more of the following: a version number of the currently released subversion of the software to be released, and defect identifier(s) of defect(s) to be resolved in the currently released subversion of the software to be released.

Specifically, after completing software update optimization based on the operator's feedback, the provider, when re-issuing a targeted update, carries the public key certificate of itself and the same context identifier in an update software package, and updates a subversion record item issued at this time and an identifier(s) of a recommended test case(s) in the interaction context, where the record item includes a new version number and a list of defect identifiers expected to have been resolved in this release (for example, an issue list subset recorded in the context corresponding to the operator feedback). The provider may then sign a digest of the software package using a private key, and optionally, perform confidentiality protection on a software update message using a provider private/symmetric key in an artifact library update notification.

At Step 403, the local interaction context is sent to the communication peer. The local interaction context includes the context identifier.

In the embodiments of the present disclosure, the provider may receive a subscription notification message sent by the operator, where the subscription notification message includes the context identifier; and send the software update message to the operator based on the subscription notification message. The software update message includes the local interaction context of the provider.

In the embodiments of the present disclosure, in the process of communication between the provider or operator and the communication peer, both parties exchange the interaction context corresponding to the same context identifier. Thus, both parties may negotiate based on the same interaction context, so as to achieve optimization iteration that allows multiple trial-and-error attempts, repeated debugging, and flexible orchestration. Therefore, the solution of the embodiments of the present disclosure can enhance the flexibility of managing an interaction process between a provider and an operator.

Optionally, in the embodiments of the present disclosure, a digest of the local interaction context may also be retrieved, the digest may be signed using a private key, and the signed local interaction context may be sent to the communication peer. In this way, the security of communication can be ensured.

In the embodiments of the present disclosure, the operator and the provider respectively apply for public key certificates from a dedicated or public Public Key Infrastructure (PKI) system approved by both parties, for integrated management of software development and operation.

Optionally, the three functional components (i.e., DevOps server, universal test system, and data processing system) in an operator development environment and a network management system in an operator production environment also respectively apply for public key certificates, for traceable fine-grained process management. The processing processes of respective phases are described below in detail with reference to several processing phases of the operator.

### I. A Onboarding Phase, including the following processes:

### 1. Update subscription: the DevOps Server subscribes to a software release/update notification

The subscription notification message carries the context identifier.

### 2. Update Notification: the provider notifies the DevOps Server of a software update

After receiving the software update message, the operator DevOps server retrieves the context identifier (including the version identifier(s)) and a storage address of the updated software. After the context identifier is found locally and validation of the context identifier is passed, the existing context is retrieved or the initial context information (state: new) for the software is generated.

The operator DevOps server performs parsing and on-demand updating on the version information and test information in a local context record, which may specifically include:
First, the version identifier(s) in the context identifier is parsed, and if the version identifier(s) indicates a temporary testing version for a specific target version, a target version context record is updated locally, and whether the context includes the defect identifier(s) provided by the provider is further parsed. If there is defect identifier(s), whether the context includes the test identifier(s) provided by the provider is further parsed. If there is/are test identifier(s), the test identifier(s) provided by the provider is populated into the current context, and the test case executed in the last iteration for the target version is populated in the current context. If the version identifier(s) indicates the target version, the processing of this step may be ended, and subsequent processing may be continued as needed. If there is no defect identifier or test identifier, the subsequent processing may be continued.

Thereafter, the operator DevOps server applies to a provider artifact library for downloading an update software package

### 3. Software Pull: the DevOps server pulls provider software

When the provider artifact library releases a new version of corresponding software, the context identifier (including the version identifier(s), the defect identifier(s), and the test identifier(s)) is carried in the software package, and a software package digest and the context identifier are signed using a private key.

### 4. Internal Operation: the DevOps Server stores the software to an internal software repository after software package verification

Specifically, the DevOps server uses the public key in the provider certificate to verify the authenticity of the digest signature of the software package and the content integrity of the software package. If the verification is passed, the subsequent process may be executed, otherwise, the process may be ended.

The DevOps server checks consistency between the version identifier(s) in the software package and the version identifier(s) of the local context. If the verification is passed, the subsequent process may be executed, otherwise, the process may be ended.

The DevOps server invokes a general test framework to check the validity (such as whether the test case template is valid, available, etc.) of the test case template referenced by the test identifier(s) in the context in the software package. If the verification is passed, the subsequent process may be executed, otherwise, the process may be ended.

After the verification is passed, a context status of a pipeline is updated to 'delivered'.

### II. Orchestration Phase

The DevOps server determines an iteration type of a current pipeline based on a context record:
If the version is a target version for delivery, execution of a testing-deployment-feedback pipeline is scheduled. If the version is a temporary version debug-verified for solving a directed problem, execution of a testing-feedback pipeline is scheduled.

### III. Testing phase

The general test framework checks the completeness of one or more test case sets referenced by the test identifier(s) in the context: if the check of the completeness is passed, a test execution system is invoked to execute the test, otherwise an error is reported to the DevOps server.

If the test is passed, the DevOps server updates the context status to 'accepted' and executes the next step of the pipeline, which may be notifying the network management system to perform software upgrade deployment, or directly enter the feedback phase, depending on the iteration type. If the test is unsuccessful, the DevOps server checks for the cause of the error and adds the cause of the error to the defect identifier set in the context. If the specific test execution fails, the data processing component is triggered to perform necessary data processing procedures such as test data desensitization.

### IV. Deployment Phase

The DevOps server notifies the network management system to perform software upgrade deployment. After the network management system in the production environment successfully performs the upgrade operation, the DevOps server updates the pipeline context information (state: deployed) and notifies the data processing component to monitor abnormal data for software operation. If the software upgrade deployment is not successful, the DevOps server updates the pipeline context information (such as adding a deployment anomaly to the defect identifier set in the context), and triggers the data processing component to perform necessary data processing procedures such as test data desensitization.

### V. Operation Phase

The network management system in the production environment performs continuous monitoring, data collection, and anomaly analysis on the deployment software based on the operation and maintenance indicators/analysis service subscription requirements of the data processing component.

### VI. Feedback Phase

The DevOps server receives a notification of completion of data (test data, operation data) processing by the data processing component, provides a feedback message (optionally, provides an additional data/analysis/record information download address) to the provider, and sends the public key certificate and context (including version identifier(s), defect identifier(s), and test identifier(s)) of the DevOps server, and optionally uses a private key/symmetric key to perform confidentiality protection on the subscription message.

After receiving the feedback message, the provider first verifies the authenticity of the operator identity using the PKI certificate. After the verification is passed, the feedback message and the additional information download address are decrypted using the operator's public key/symmetric key, and it is confirmed that the feedback message is successfully received. Subsequently, when retrieving the additional information, the provider carries the public key certificate of the provider in the download request, and optionally uses the provider's private key/symmetric key to perform confidentiality protection on a download request message.

After receiving the data download request, the operator first verifies the authenticity of the provider identity using the PKI certificate. After the verification is passed, the download request message is decrypted using the provider's public key/symmetric key, and it is confirmed that the download request message is successfully received. Subsequently, when data information is transferred, the operator's private key/symmetric key may be optionally used to perform confidentiality, integrity, and authenticity protection on transferred information in a message body encryption and/or digest signature manner.

### VII. Iteration Phase

After completing software update optimization based on the operator's feedback, the provider, when re-issuing a targeted update, carries the public key certificate of the provider and the same context identifier in an update software package, updates and adds a subversion record item (including a new version number and a list of defect identifiers expected to have been solved in this release (which should be an issue list subset in the context record corresponding to the operator feedback)) and a recommended test case identifier(s) in the context record, signs the software package digest using a private key, and optionally uses the provider's private key/symmetric key in the artifact library update notification to perform confidentiality protection on a software update message.

In the above phases, in order to achieve traceability in the operator's internal pipeline management, a unique and non-tamperable pipeline execution record is created for each piece of network software entering the pipeline.

Each record consists of two parts: a body part and a digest signature part. The body part includes a current latest execution record, and the digest signature is generated by a current-process executor signing the digest of the content of the body part using the private key of the current-process executor, and is used for the third party to check the integrity of the content of the body part and the authenticity of the content from the current-phase executor.

After receiving a process task and before executing a corresponding task, the current-process executor (test framework/network management system/data processing component) first verifies the content integrity and source authenticity of the execution record by checking the digest signature of the execution record, and once an anomaly (process anomaly, signature anomaly, etc.) that is inconsistent with expectations is found, the current-process executor refuses to proceed with the current process and reports an execution check error to the DevOps server. If no anomalies are found, the current-process executor continues to execute the corresponding task, writes an execution result to the end of the execution record in an appended form, and finally, re-extracts a digest value from the updated execution record and signs using the private key of the current-process executor.

As can be seen from the above, the provider and the operator can negotiate based on the same interaction context, so as to achieve optimization iteration that allows multiple trial-and-error attempts, repeated debugging, and flexible orchestration. Therefore, the solution of the embodiments of the present disclosure can enhance the flexibility of managing an interaction process between a provider and an operator.

Referring to FIG. 5, FIG. 5 is a structural diagram of an interaction context management apparatus according to an embodiment of the present disclosure, which is applied to an operator. As shown in FIG. 5, the interaction context management apparatus includes: an acquisition module 501, a processing module 502 and a sending module 503.

The acquisition module 501 is configured to retrieve an interaction context of a communication peer, wherein the interaction context of the communication peer includes a context identifier.

The processing module 502 is configured to perform processing based on the interaction context of the communication peer, so as to acquire a processing result, and obtain a local interaction context according to the processing result.

The sending module 503 is configured to send the local interaction context to the communication peer. The local interaction context includes the context identifier.

The communication peer of the operator is the provider.

Optionally, one or more version identifiers may be configured to identify version information of software to be released; defect identifier(s) is/are used to identify defect(s) expected to be resolved in a current version of the software to be released, or to identify defect(s) encountered during testing or maintenance processes of the current version of the software to be released; and test identifier(s) may be configured to identify test case(s) that aim to verify resolved defect(s) in the current version of the software to be released, or to identify test case(s) that are used to verify the existence of defect(s) in the current version of the software to be released.

Optionally, the apparatus may further include a sending module, configured to send a subscription notification message to the provider during a software onboarding phase. The subscription notification message includes the context identifier.

Optionally, the processing module may be further configured to: receive a software update message sent by the provider during the software onboarding phase, wherein the software update message includes the interaction context of the communication peer; validate the context identifier in the software update message; and after the validation of the context identifier is passed, update a local context, and generate the local interaction context.

Optionally, the processing module may be further configured to: in response to determining, based on the version identifier(s) in the interaction context of the communication peer, that the current version is a testing version of a target version of the software to be released and the interaction context of the communication peer includes the defect identifier(s) and the test identifier(s), record the test identifier(s) in the local context and populate test case(s) corresponding to the target version, and generate the local interaction context.

Optionally, the processing module may be further configured to: obtain a software package sent by the provider during the software onboarding phase, where the software package includes the interaction context of the communication peer, and the interaction context of the communication peer includes the version identifier(s), the defect identifier(s), and the test identifier(s); validate the version identifier(s) in the software package; after the validation of the version identifier(s) is passed, determine the validity of a test case template corresponding to the test identifier; and after verification of the validity of the test case template is passed, update a context status in the local context, and generate the local interaction context.

Optionally, the apparatus may further include: a first determination module, configured to determine an iteration type of a current pipeline based on the version identifier(s) in the interaction context of the communication peer.

Optionally, the first determination module may be further configured to: if the version identifier(s) in the interaction context of the communication peer indicates that the current version is a target version for delivery of the software to be released, determine that the iteration type of the current pipeline is a testing-deployment-feedback pipeline; and if the version identifier(s) in the interaction context of the communication peer indicates that the current version is a testing version of the software to be released, determine that the iteration type of the current pipeline is a testing-feedback pipeline.

Optionally, the processing module may be further configured to: verify, during a testing phase, completeness of one or more test case sets corresponding to the test identifier(s) based on the test identifier(s) in the interaction context of the communication peer; if the verification of the completeness of the one or more test case sets corresponding to the test identifier(s) is passed, test the one or more test case sets; if the test is passed, update the context status in the local context to 'accepted', and obtain the local interaction context; and if the test is unsuccessful, record the defect identifier(s) in the local context, and obtain the local interaction context.

Optionally, the processing module may be further configured to: during a deployment phase, if a software upgrade is successful, update the context status in the local context to 'deployed', and obtain the local interaction context; and if the software upgrade is not successful, add defect identifier(s) to the local context, and obtain the local interaction context.

Optionally, the processing module may be further configured to: during a feedback phase, send the local interaction context to the provider, where the local interaction context includes the version identifier(s), the defect identifier(s), and the test identifier(s).

Optionally, the interaction context of the communication peer may further include: information of a currently released subversion of the software to be released; and one or more identifiers of one or more test cases corresponding to the subversion; where the information of the currently released subversion of the software to be released includes one or more of the following: a version number of the currently released subversion of the software to be released; and defect identifier(s) of defect(s) to be resolved in the currently released subversion of the software to be released.

Optionally, the apparatus may further include: a second determination module, configured to determine, based on test identifier(s) in a local context, test case(s) corresponding to the test identifier(s); and a parsing module, configured to parse test topology information corresponding to the test case(s), where the test topology information is used for root cause analysis of test anomalies by the operator and/or the provider.

Optionally, the apparatus may further include: a verification module, configured to verify the interaction context of the communication peer; and the acquisition module may be further configured to, if the verification of the interaction context of the communication peer is passed, perform processing based on the interaction context of the communication peer, so as to acquire the processing result, and obtain the local interaction context according to the processing result.

Optionally, the apparatus may further include: a signature module, configured to retrieve a digest of the local interaction context, and sign the digest using a private key; and the sending module may be further configured to send the signed local interaction context to the communication peer.

The apparatus according to the embodiments of the present disclosure can perform the above method embodiment, and has a similar implementation principle and technical effect, and details are not described in this embodiment again.

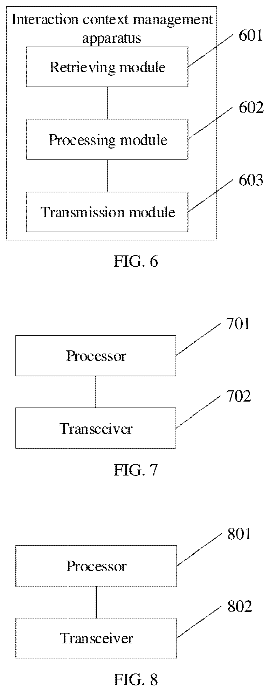

Referring to FIG. 6, FIG. 6 is a structural diagram of a further interaction context management apparatus according to an embodiment of the present disclosure, which is applied to a provider. As shown in FIG. 6, the interaction context management apparatus includes: an acquisition module 601, a processing module 602, and a sending module 603.

The acquisition module 601 is configured to retrieve an interaction context of a communication peer, where the interaction context of the communication peer includes a context identifier.

The processing module 602 is configured to configured to perform processing based on the interaction context of the communication peer to acquire a processing result, and obtain a local interaction context according to the processing result.

The sending module 603 is configured to send the local interaction context to the communication peer, where the local interaction context includes the context identifier.

The communication peer of the provider is the operator.

Optionally, if the apparatus is applied to the provider, the apparatus may further include: a reception module, configured to receive, during a software onboarding phase, a subscription notification message sent by the operator. The subscription notification message may include the context identifier; and the sending module may be configured to send a software update message to the operator based on the subscription notification message, where the software update message includes the local interaction context.

Optionally, if the apparatus is applied to the provider, the processing module may be further configured to: retrieve a first defect identifier and/or a first test identifier in the interaction context of the communication peer, and perform processing based on the first defect identifier and/or the first test identifier; and obtain a second defect identifier and/or a second test identifier according to a processing result, and record the second defect identifier and/or the second test identifier in a local context and obtain the local interaction context.

Optionally, if the apparatus is applied to the provider, the local interaction context may further include: information of a currently released subversion of the software to be released; and one or more identifiers of one or more test cases corresponding to the subversion; where the information of the currently released subversion of the software to be released includes one or more of the following: a version number of the currently released subversion of the software to be released; and defect identifier(s) of defect(s) to be resolved in the currently released subversion of the software to be released.

Optionally, the apparatus may further include: a verification module, configured to verify the interaction context of the communication peer; and the acquisition module may be further configured to, if the verification of the interaction context of the communication peer is passed, perform processing based on the interaction context of the communication peer, so as to acquire the processing result, and obtain the local interaction context according to the processing result.

Optionally, the apparatus may further include: a signature module, configured to retrieve a digest of the local interaction context, and sign the digest using a private key; and the sending module may be further configured to send the signed local interaction context to the communication peer.

The apparatus provided in the embodiments of the present disclosure can perform the above method embodiment, and has a similar implementation principle and technical effect, and details are not described in this embodiment again.

Referring to FIG. 7, FIG. 7 is a structural diagram of an interaction context management device according to an embodiment of the present disclosure, which is applied to a provider. As shown in FIG. 7, the interaction context management apparatus includes: a processor 701 and a transceiver 702.

The processor 701 is configured to: retrieve an interaction context of a communication peer, where the interaction context of the communication peer includes a context identifier; and perform processing based on the interaction context of the communication peer to acquire a processing result, and obtain a local interaction context according to the processing result. The transceiver 702 is configured to send the local interaction context to the communication peer, where the local interaction context includes the context identifier. The communication peer of the provider is the operator.

Optionally, the processor 701 is further configured to: receive, during a software onboarding phase, a subscription notification message sent by the operator, where the subscription notification message includes the context identifier; and send a software update message to the operator based on the subscription notification message, where the software update message includes the local interaction context.

Optionally, the processor 701 is further configured to: acquire a first defect identifier and/or a first test identifier in the interaction context of the communication peer, and perform processing based on the first defect identifier and/or the first test identifier; and obtain a second defect identifier and/or a second test identifier according to a processing result, and record the second defect identifier and/or the second test identifier in a local context, and generate the local interaction context.

Optionally, if the apparatus is applied to the provider, the local interaction context further includes: information of a currently released subversion of the software to be released; and one or more identifiers of one or more test cases corresponding to the subversion; where the information of the currently released subversion of the software to be released includes one or more of the following: a version number of the currently released subversion of the software to be released; and defect identifier(s) of defect(s) to be resolved in the currently released subversion of the software to be released.

Optionally, the processor 701 is further configured to: determine, based on test identifier(s) in a local context, test case(s) corresponding to the test identifier(s); and parse test topology information corresponding to the test case(s), where the test topology information is used for root cause analysis of test anomalies by the operator and/or the provider.

Optionally, the processor 701 is further configured to: verify the interaction context of the communication peer; and if the verification of the interaction context of the communication peer is passed, perform processing based on the interaction context of the communication peer to acquire the processing result, and obtain the local interaction context according to the processing result.

Optionally, the processor 701 is further configured to: retrieve a digest of the local interaction context, and sign the digest using a private key; and send the signed local interaction context to the communication peer.

The apparatus according to the embodiments of the present disclosure can perform the above method embodiment, and has a similar implementation principle and technical effect, and details are not described in this embodiment again.

Referring to FIG. 8, FIG. 8 is a structural diagram of a further interaction context management device according to an embodiment of the present disclosure, which is applied to an operator. As shown in FIG. 8, the interaction context management device includes: a processor 801 and a transceiver 802.

The processor 801 is configured to retrieve an interaction context of a communication peer, where the interaction context of the communication peer includes a context identifier; and perform processing based on the interaction context of the communication peer to acquire a processing result, and obtain a local interaction context according to the processing result.

The transceiver 802 is configured to send the local interaction context to the communication peer, where the local interaction context includes the context identifier.

The communication peer of the provider is the operator, and the communication peer of the operator is the provider.

Optionally, version identifier(s) is/are used to identify version information of software to be released; defect identifier(s) is/are used to identify defect(s) expected to be resolved in a current version of the software to be released, or to identify defect(s) encountered during testing or maintenance processes of the current version of the software to be released; and test identifier(s) is/are used to identify test case(s) that aim to verify resolved defect(s) in the current version of the software to be released, or to identify test case(s) that are used to verify the existence of defect(s) in the current version of the software to be released.

Optionally, the processor 801 is further configured to: send a subscription notification message to the provider during a software onboarding phase, where the subscription notification message includes the context identifier.

Optionally, the processor 801 is further configured to: receive a software update message sent by the provider during the software onboarding phase, where the software update message includes the interaction context of the communication peer; validate the context identifier in the software update message; and after the validation of the context identifier is passed, update a local context, and generate the local interaction context.

Optionally, the processor 801 is further configured to: if it is determined, based on the version identifier(s) in the interaction context of the communication peer, that the current version is a testing version of a target version of the software to be released and the interaction context of the communication peer includes the defect identifier(s) and the test identifier(s), record the test identifier(s) in the local context and populate test case(s) corresponding to the target version, and generate the local interaction context.

Optionally, the processor 801 is further configured to: obtain a software package sent by the provider during the software onboarding phase, where the software package includes the interaction context of the communication peer, and the interaction context of the communication peer includes the version identifier(s), the defect identifier(s), and the test identifier(s); validate the version identifier(s) in the software package; after the validation of the version identifier(s) is passed, determine the validity of a test case template corresponding to the test identifier; and after verification of the validity of the test case template is passed, update a context status in the local context, and generate the local interaction context.

Optionally, the processor 801 is further configured to: determine an iteration type of a current pipeline based on the version identifier(s) in the interaction context of the communication peer.

Optionally, the processor 801 is further configured to: if the version identifier(s) in the interaction context of the communication peer indicates that the current version is a target version for delivery of the software to be released, the iteration type of the current pipeline is a testing-deployment-feedback pipeline; and if the version identifier(s) in the interaction context of the communication peer indicates that the current version is a testing version of the software to be released, the iteration type of the current pipeline is a testing-feedback pipeline.

Optionally, the processor 801 is further configured to: verify, during a testing phase, the completeness of one or more test case sets corresponding to the test identifier(s) based on the test identifier(s) in the interaction context of the communication peer; if the verification of the completeness of the one or more test case sets corresponding to the test identifier(s) is passed, test the one or more test case sets; if the test is passed, update the context status in the local context to 'accepted', and generate the local interaction context; and if the test is unsuccessful, record the defect identifier(s) in the local context, and generate the local interaction context.

Optionally, the processor 801 is further configured to: during a deployment phase, if a software upgrade is successful, update the context status in the local context to 'deployed', and generate the local interaction context; and if the software upgrade is not successful, add defect identifier(s) to the local context, and generate the local interaction context.

Optionally, the processor 801 is further configured to: during a feedback phase, send the local interaction context to the provider, where the local interaction context includes the version identifier(s), the defect identifier(s), and the test identifier(s).

Optionally, the interaction context of the communication peer further includes: information of a currently released subversion of the software to be released; and one or more identifiers of one or more test cases corresponding to the subversion; where the information of the currently released subversion of the software to be released includes one or more of the following: a version number of the currently released subversion of the software to be released; and defect identifier(s) of defect(s) to be resolved in the currently released subversion of the software to be released.

The apparatus provided in the embodiments of the present disclosure can perform the above method embodiment, and has a similar implementation principle and technical effect, and details are not described in this embodiment again.

It should be noted that the division of units in the embodiments of the present disclosure is illustrative, and is only a logical function division, and there may be other division manners in actual implementation. In addition, the functional units in various embodiments of the present disclosure may be integrated in one processing unit, or each unit may be individually physically present, or two or more units may be integrated into one unit. The integrated units described above may be implemented in the form of hardware or in the form of software functional units.

If the integrated units described above are implemented in the form of software functional units and sold or used as separate products, they may be stored in a processor-readable storage medium. On the basis of such understanding, an essential part of the technical solution of the present disclosure, or the part thereof that contributes to the prior art, or all or part of the technical solution may be embodied in the form of a software product. The computer software product is stored in a storage medium, and includes several instructions used to enable a computer device (which may be a personal computer, a server, a network device, or the like) or a processor to perform all or part of the steps of the methods described in the various embodiments of the present disclosure. The foregoing storage medium includes: a U disk, a mobile hard disk, a Read Only Memory (ROM), a Random Access Memory (RAM), a magnetic disk, an optical disk, or various media that can store program codes.

An embodiment of the present disclosure further provides a communication device, including: a memory, a processor, and a program stored on the memory and executable on the processor, where the processor is configured to read the program in the memory to implement the steps in the aforementioned interaction context management method.

An embodiment of the present disclosure further provides a non-transitory computer-readable storage medium having a program stored thereon. The program, when executed by a processor, implements each process in the embodiments of the interaction context management method, and can achieve the same technical effects, of which details are not described here again to avoid repetition. The readable storage medium may be any available medium or data storage device accessible by the processor, including, but not limited to, a magnetic memory (e.g., a floppy disk, a hard disk, a magnetic tape, a magneto-optical disk (MO), etc.), an optical memory (e.g., a CD, a DVD, a BD, an HVD, etc.), a semiconductor memory (e.g., a ROM, an EPROM, an EEPROM, a non-volatile memory (NAND FLASH), a solid state disk (SSD)), and the like.

It should be noted that the terms "comprising", "including", or any other variation thereof herein are intended to indicate non-exclusive inclusion, so that processes, methods, articles, or apparatuses including a series of elements not only include those elements, but also include other elements not explicitly listed, or further include elements inherent to such processes, methods, articles, or apparatuses. In the absence of more limitations, an element defined by the statement "comprising a..." does not preclude the presence of additional same elements in a process, method, article or device that includes the element.

Through the description of the above implementations, those skilled in the art can clearly understand that the method in the above embodiments can be implemented by means of software plus a necessary general hardware platform, and certainly, can also be implemented by hardware, but in many cases, the former is a better implementation. On the basis of such an understanding, the technical solutions of the present disclosure in essence, or the part of the technical solutions of the present disclosure that contributes to the prior art, may be embodied in the form of a software product, and the computer software product is stored in a storage medium (such as a ROM/RAM, a magnetic disk, an optical disk) and includes instructions for causing a terminal (which may be a mobile phone, a computer, a server, an air conditioner, or a network device, etc.) to perform the methods described in the various embodiments of the present disclosure.

The embodiments of the present disclosure are described above with reference to the accompanying drawings, but the present disclosure is not limited to the above specific implementations which are merely illustrative and not restrictive, and those of ordinary skill in the art can make many forms under the inspiration of the present disclosure without departing from the spirit of the present disclosure and the scope of protection defined by the claims, all of which fall within the scope of protection of the present disclosure.

## Claims

1. An interaction context management method applied to a provider or an operator, the method comprising:
retrieving an interaction context of a communication peer, wherein the interaction context of the communication peer comprises a context identifier;
performing processing based on the interaction context of the communication peer to acquire a processing result, and obtaining a local interaction context according to the processing result; and
sending the local interaction context to the communication peer, wherein the local interaction context comprises the context identifier;
wherein the communication peer of the provider is the operator, and the communication peer of the operator is the provider.

2. The method according to claim 1, wherein the interaction context of the communication peer further comprises one or more of the following:
one or more version identifiers, configured to identify version information of software to be released;
one or more defect identifiers, configured to one or more identify defects expected to be resolved in a current version of the software to be released, or to identify one or more defects encountered during testing or maintenance processes of the current version of the software to be released; and
one or more test identifiers, configured to identify one or more test cases that aim to verify one or more resolved defects in the current version of the software to be released, or to identify one or more test cases that are used to verify the existence of one or more defects in the current version of the software to be released.

3. The method according to claim 2, wherein the method is applied to the operator, and the method further comprises:
sending a subscription notification message to the provider during a software onboarding phase, wherein the subscription notification message comprises the context identifier.

4. The method according to claim 3, wherein the performing processing based on the interaction context of the communication peer to acquire a processing result, and obtaining a local interaction context according to the processing result comprises:
receiving a software update message sent by the provider during the software onboarding phase, wherein the software update message comprises the interaction context of the communication peer;
validating the context identifier in the software update message; and
after the validation of the context identifier is passed, updating a local context, and generating the local interaction context.

5. The method according to claim 4, wherein the updating a local context, and generating the local interaction context comprises:
in response to determining, based on the one or more version identifiers in the interaction context of the communication peer, that the current version is a testing version of a target version of the software to be released and the interaction context of the communication peer comprises the one or more defect identifiers and the one or more test identifiers, recording the one or more test identifiers in the local context and populating one or more test cases corresponding to the target version, and generating the local interaction context.

6. The method according to claim 3, wherein the performing processing based on the interaction context of the communication peer to acquire a processing result, and obtaining a local interaction context according to the processing result comprises:
obtaining a software package sent by the provider during the software onboarding phase, wherein the software package comprises the interaction context of the communication peer, and the interaction context of the communication peer comprises the one or more version identifiers, the one or more defect identifiers, and the one or more test identifiers;
validating the one or more version identifiers in the software package;
after the validation of the one or more version identifiers is passed, determining validity of a test case template corresponding to the one or more test identifiers; and
after verification of the validity of the test case template is passed, updating a context status in a local context, and generating the local interaction context.

7. The method according to claim 2, wherein the method is applied to the operator, and the method further comprises:
determining an iteration type of a current pipeline based on the one or more version identifiers in the interaction context of the communication peer.

8. The method according to claim 7, wherein the determining an iteration type of a current pipeline based on the one or more version identifiers in the interaction context of the communication peer comprises:
if the one or more version identifiers in the interaction context of the communication peer indicates that the current version is a target version for delivery of the software to be released, determining that the iteration type of the current pipeline is a testing-deployment-feedback pipeline; and
if the one or more version identifiers in the interaction context of the communication peer indicates that the current version is a testing version of the software to be released, determining that the iteration type of the current pipeline is a testing-feedback pipeline.

9. The method according to claim 7, wherein the method is applied to the operator, the performing processing based on the interaction context of the communication peer to acquire a processing result, and obtaining a local interaction context according to the processing result comprises:
verifying, during a testing phase, completeness of one or more test case sets corresponding to the one or more test identifiers in the interaction context of the communication peer;
if the verification of the completeness of the one or more test case sets corresponding to the one or more test identifiers is passed, testing the one or more test case sets;
if the test is passed, updating a context status in a local context, and generating the local interaction context; and if the test is unsuccessful, recording the defect identifiers in the local context, and generating the local interaction context.

10. The method according to claim 7, wherein the method is applied to the operator, the performing processing based on the interaction context of the communication peer to acquire a processing result, and obtaining a local interaction context according to the processing result comprises:
during a deployment phase, if a software upgrade is successful, updating a context status in a local context to 'deployed', and generating the local interaction context; and
if the software upgrade is not successful, adding the one or more defect identifiers to the local context, and generating the local interaction context.

11. The method according to claim 2, wherein the method is applied to the operator, and the sending the local interaction context to the communication peer comprises:
during a feedback phase, sending the local interaction context to the provider, wherein the local interaction context comprises the one or more version identifiers, the one or more defect identifiers, and the one or more test identifiers.

12. The method according to claim 2, wherein the method is applied to the operator, and the interaction context of the communication peer further comprises:
information of a currently released subversion of the software to be released; and
one or more identifiers of one or more test cases corresponding to the subversion;
wherein the information of the currently released subversion of the software to be released comprises one or more of the following: a version number of the currently released subversion of the software to be released, and one or more defect identifiers of one or more defects to be resolved in the currently released subversion of the software to be released.

13. The method according to claim 2, wherein the method is applied to the operator, and the method further comprises:
determining, based on one or more test identifiers in a local context, one or more test cases corresponding to the one or more test identifiers; and
parsing test topology information corresponding to the one or more test cases, wherein the test topology information is used for root cause analysis of test anomalies performed by the operator and/or the provider.

14. The method according to claim 2, wherein the method is applied to the provider, and the method further comprises:
receiving, during a software onboarding phase, a subscription notification message sent by the operator, wherein the subscription notification message comprises the context identifier;
wherein the sending the local interaction context to the communication peer comprises:
sending a software update message to the operator based on the subscription notification message, wherein the software update message comprises the local interaction context.

15. The method according to claim 14, wherein if the method is applied to the provider, the performing processing based on the interaction context of the communication peer to acquire a processing result, and obtaining a local interaction context according to the processing result comprises:
retrieving a first defect identifier and/or a first test identifier in the interaction context of the communication peer, and performing processing based on the first defect identifier and/or the first test identifier; and
obtaining a second defect identifier and/or a second test identifier according to a processing result, and recording the second defect identifier and/or the second test identifier in a local context, and generating the local interaction context.

16. The method according to claim 2, wherein if the method is applied to the provider, the local interaction context further comprises:
information of a currently released subversion of the software to be released; and
one or more identifiers of one or more test cases corresponding to the subversion;
wherein the information of the currently released subversion of the software to be released comprises one or more of the following: a version number of the currently released subversion of the software to be released, and one or more defect identifiers of one or more defects to be resolved in the currently released subversion of the software to be released.

17. The method according to claim 1, wherein the method further comprises:
verifying the interaction context of the communication peer;
wherein the performing processing based on the interaction context of the communication peer to acquire a processing result, and obtaining a local interaction context according to the processing result comprises:
if the verification of the interaction context of the communication peer is passed, performing processing based on the interaction context of the communication peer to acquire the processing result, and obtaining the local interaction context according to the processing result.

18. The method according to claim 1, further comprising:
retrieving a digest of the local interaction context, and signing the digest using a private key;
wherein the sending the local interaction context to the communication peer comprises:
sending the signed local interaction context to the communication peer.

19. An interaction context management system, comprising:
a provider, configured to provide software to an operator to obtain an interaction context of the provider, and send the interaction context of the provider to the operator; and perform processing based on feedback information sent by the operator to obtain a local interaction context of the provider, and send the local interaction context of the provider to the operator; and
the operator, configured to process the software with reference to the interaction context of the provider to obtain feedback information, and send the feedback information to the provider, wherein the feedback information comprises the local interaction context obtained by the operator.

20. An interaction context management apparatus applied to a provider or an operator, comprising:
an acquisition module, configured to retrieve an interaction context of a communication peer, wherein the interaction context of the communication peer comprises a context identifier;
a processing module, configured to perform processing based on the interaction context of the communication peer to acquire a processing result, and obtain a local interaction context according to the processing result; and
a sending module, configured to send the local interaction context to the communication peer, wherein the local interaction context comprises the context identifier;
wherein the communication peer of the provider is the operator, and the communication peer of the operator is the provider.

21. An interaction context management apparatus, applied to a provider or an operator, comprising: a processor and a transceiver;
wherein the processor is configured to retrieve an interaction context of a communication peer, wherein the interaction context of the communication peer comprises a context identifier; and
perform processing based on the interaction context of the communication peer to acquire a processing result, and obtain a local interaction context according to the processing result; and
the transceiver is configured to send the local interaction context to the communication peer, wherein the local interaction context comprises the context identifier;
wherein the communication peer of the provider is the operator, and the communication peer of the operator is the provider.

22. A communication device, comprising: a memory, a processor, and a program stored in the memory and executable by the processor, wherein the processor is configured to read the program in the memory to implement the steps in the interaction context management method according to any one of claims 1 to 18.

23. A computer-readable storage medium, configured to store a program, wherein the program, when executed by a processor, implements the steps in the interaction context management method according to any one of claims 1 to 18.

24. A computer program product comprising instructions, wherein the instructions, when executed by a processor, cause the processor to execute the steps in the interaction context management method according to any one of claims 1 to 18.
